# EUROPÄISCHE PATENTANMELDUNG

(11) **EP 2 993 537 A1**
(43) Veröffentlichungstag der Anmeldung: **09.03.2016**
(21) Anmeldenummer: 14183939.9
(22) Anmeldetag: 08.09.2014
(51) Int. Cl.: G05B 19/048, H04B 3/54

(54) **Diagnose von Fehlern in Automatisierungssystemen**

(71) Anmelder: Siemens Aktiengesellschaft, 80333 München (DE)
(72) Erfinder: Jehl, Gautier, 91058 Erlangen (DE)

(57) **Zusammenfassung**

Die Erfindung betrifft ein Verfahren zur Diagnose von Fehlern in Anlagen und/oder Maschinen, die Anlagen und/oder Maschinen umfassend eine Vielzahl von Automatisierungs- und/oder Steuerungskomponenten (1),(2), wobei die Komponenten über eine erste Netzwerkstruktur (4),(5),(10) miteinander verbunden sind, wobei über die erste Netzwerksstruktur Daten zur Steuerung und/oder Überwachung der Komponenten im Betrieb der Anlage und/oder Maschine übertragen werden, dadurch gekennzeichnet, dass die Anlage eine zweite Netzwerkstruktur (11) aufweist, wobei die zweite Netzwerkstruktur unabhängig von der ersten Netzwerkstruktur ist und keine Daten zur Steuerung und Überwachung im Betrieb der Anlage überträgt und die zweite Netzwerkstruktur eine Datenübertragungstechnologie auf Stromversorgungsleitungen verwendet über die die Komponenten mit Energie versorgt werden, wobei die Fehlerdiagnose auf einer im Wesentlichen logischen Auswertung von Datenabfragen über die zweite Netzwerkstruktur erfolgt.

Die Erfindung betrifft ferner eine Automatisierungs- und/oder Steuerungskomponente zur Ausführung des Verfahrens.

## Beschreibung

Die Erfindung betrifft ein Verfahren zur Diagnose von Fehlern in Automatisierungssystemen. Die Erfindung betrifft ferner Automatisierungs- und/oder Steuerungskomponenten geeignet zur Ausführung des Verfahrens.

Automatisierungssysteme in der Fabrikautomation bestehen aus einer Reihe von unterschiedlichen Automatisierungskomponenten im Wesentlichen in der Steuerungs- und Feldebene wie beispielsweise speicherprogrammierbare Steuerungen. Unter dem Begriff Automatisierungs- und/oder Steuerungskomponente sind dabei jede intelligente und mit Software ausgestattete Feldkomponente zu verstehen und insoweit sollen auch Antriebs-(z.B. Umrichter und/oder Motoren), Überwachungs- oder Sensorkomponenten vom Begriff umfasst sein. Die Automatisierungsund oder Steuerungskomponenten sind in der Regel untereinander vernetzt und werden von verschiedenen, hierarchisch angeordneten, übergeordneten Steuerung bedient und/oder überwacht. Dabei gibt es für unterschiedliche Aufgaben eine Vielzahl von unterschiedlichen Automatisierungs- und/oder Steuerungskomponenten. Aber selbst für ähnliche Aufgaben gibt es inzwischen eine schwer zu überschaubare Anzahl unterschiedlicher Anlagenkomponenten. Der Anlagendesigner muss während des Konfigurationsprozesses einer Automatisierungsanlage aus einer Vielzahl unterschiedlicher Automatisierungs- und oder Steuerungskomponenten auswählen, wobei die Auswahl nicht nur nach funktionalen Gesichtspunkten zu erfolgen hat, sondern auch Fragestellungen ökonomischer, energetischer oder ökologischer Art zu berücksichtigen sind. Im Ergebnis können Automatisierungssysteme für die Steuerung und Überwachung von Anlagen oder Maschinen die bestimmte Aufgaben zu erfüllen haben mit sehr verschiedenen Anlagenkomponenten aufgebaut sein. Diese können unterschiedliche Kommunikationsnetzwerke mit unterschiedlichen Kommunikationsprotokollen aufweisen, wie zum Beispiel Profibus DP oder Profinet.

Im Falle einer Störung einer Produktionsanlage wird i.d.R. ein Servicetechniker vor Ort damit betraut werden eine Fehleranalyse der Anlage durchzuführen. Um eine Fehleranalyse effektiv durchführen zu können, muss der Servicetechniker sich schnell einen Überblick darüber verschaffen, welche Automatisierungs- und/oder Steuerungskomponenten in dem Automatisierungssystem eingesetzt sind bzw. wie diese, d.h. z.B. in welcher Reihenfolge und in welcher Topologie diese im Kommunikationsnetzwerk verbunden sind. So ist eine rein linienförmige Vernetzung möglich, aber auch sternförmige Netzstrukturen oder Mischformen daraus.

In einigen Fällen wird der Servicetechniker vorgenannte Informationen aus der Anlagendokumentation entnehmen können. Die Qualität und der Detailierungsgrad der Anlagendokumentation sind z.T. sehr unterschiedlich, so dass es in einigen Fällen nicht möglich ist, die notwendigen Informationen schnell zu bekommen. Oder aber Automatisierungssysteme können im Laufe der Zeit geändert worden sein, ohne dass die Anlagendokumentation ebenfalls aktualisiert worden ist. Solche Aktualisierungen können den Einbau anderer Automatisierungskomponenten umfassen oder sogar eine Erweiterung der Anlage beinhalten.

In anderen Fällen wird sich der Servicetechniker über seinen Servicecomputer in das Netzwerk des Automatisierungssystems verbinden können, um softwaregestützt die aktiven Automatisierungskomponenten abzufragen. Antwortet eine Automatisierungskomponente nicht, wird der Servicetechniker zu prüfen haben, ob diese Komponente überhaupt eingebaut ist oder aus anderen Gründen nicht angesprochen werden kann. Für den Fall, dass eine Automatisierungskomponente verfügbar, aber nicht angesprochen werden kann, sind verschiedene Fehlerursachen vorstellbar, die weiter einzeln abgeprüft werden müssen. Dies kann insbesondere bei komplexeren Automatisierungssystemen, die auch noch räumlich weitläufig aufgebaut sein können, sehr zeitintensiv sein.

Was auch immer im Einzelfall die Ursache für einen Ausfall des Automatisierungssystems sein mag, der Servicetechniker wird auf seinen eigenen Erfahrungsschatz angewiesen sein, den Fehler schnell zu lokalisieren und einzugrenzen. Je mehr Informationen er verfügbar hat, je kompetenter und schneller wird er seine Entscheidungen treffen können.

Es ist demnach Aufgabe der Erfindung ein Verfahren und die notwendigen Vorrichtungen zur Ausführung des Verfahrens bereitzustellen, welche einem Servicetechniker bei der Diagnose von Fehlern besser unterstützt und schnell Informationen zu möglichen Fehlern, Fehlerorten und fehlerhaften Automatisierungskomponenten liefern.

Die Aufgabe wird gelöst durch ein Verfahren mit den Merkmalen des Anspruchs 1 und einer Automatisierungs- oder Steuerungskomponente mit den Merkmalen des Anspruchs 7. Das erfindungsgemäße Verfahren zur Diagnose von Fehlern in Anlagen und/oder Maschinen umfasst eine Vielzahl von Automatisierungs- und/ oder Steuerungskomponenten. Diese Komponenten sind über eine erste Netzwerkstruktur miteinander in bekannter Weise verbunden. Diese erste Netzwerkstruktur kann eine beliebige Topologie aufweisen. Über diese erste Netzwerksstruktur werden Daten zur Steuerung und Überwachung der Komponenten im Betrieb der Anlage und/oder Maschine übertragen. Unter Betrieb der Anlage respektive Maschine soll dabei der bestimmungsgemäße, laufende Betrieb verstanden werden, wie er im Einsatz der Anlage oder Maschine erwartet wird. Er beinhaltet demnach sämtlich vorgesehene Steuerungs- und Überwachungsfunktionen der Anlage oder Maschine. Dabei kann diese erste Netzwerkstruktur zur Erhöhung der Sicherheit auch redundant aufgebaut sein. Die Anlage oder Maschine weist eine zweite Netzwerkstruktur auf, wobei die zweite Netzwerkstruktur unabhängig von der ersten Netzwerkstruktur ist und keine Daten zur Steuerung und Überwachung im Betrieb der Anlage überträgt, d.h. ein Betreiben der Anlage oder Maschine soll vollumfänglich allein über die erste Netzwerkstruktur möglich sein. Auch bei etwaigem Ausfall der ersten Netzwerkstruktur ist ein Betrieb der Anlage über die zweite Netzwerkstruktur nicht möglich. Für die zweite Netzwerkstruktur wird eine Datenübertragungstechnologie auf Stromversorgungsleitungen verwendet über die die Komponenten mit Energie versorgt werden. Solche Übertragungstechnologien wie sie auch unter dem Namen PLC (power line carrier) bekannt sind, können dabei verschiedene Modulationsverfahren wie beispielsweise FSK (frequency shift keying) oder OFDM (orthogonal frequency-division multiplexing) beinhalten. Zu diesem Zweck weist eine Automatisierungs- oder Steuerungskomponenten wenigstens ein PLC-Modul auf, über das Daten über das Stromversorgungsnetz übertragen werden. Vorteilhafter Weise wird die zweite Netzwerkstruktur über das bereits vorhandene Stromversorgungsnetz, an das die Automatisierungs- und Steuerungskomponenten angeschlossen sind aufgebaut.

Die Fehlerdiagnose für die Anlage oder Maschine erfolgt auf einer im Wesentlichen logischen Auswertung von Datenabfragen über die zweite Netzwerkstruktur. So kann das PLC-Modul elektrische Daten, beispielsweise Daten vom Stromverbrauch der Automations- oder Steuerungskomponenten melden. Solche Daten können beispielhaft auch die Höhe des Stromes umfassen, aber auch Strom- und oder Spannungsverläufe zum Einschaltzeit-punkt, oder zu Lastwechseln, oder aber Frequenzspektren des Stromes oder der Spannung können aufgenommen und über die zweite Netzwerkstruktur übertragen werden. Andere elektrischen Daten wären ebenso übertragbar. Zur Fehlerdiagnose können diese Daten mit den zugehörigen Normwerten verglichen werden. Die Normwerte können sich dabei aus der Anlagendokumentation oder der technischen Dokumentation der entsprechenden Komponente ergeben. Sie könnten aber auch während der Inbetriebsetzung oder auch während des Betriebes aufgezeichnet und abgespeichert worden sein. Darüber hinaus können die PLC-Module der Automatisierungs- oder Steuerungskomponenten auch zeitsynchronisiert werden, was z.B. vorteilhaft an der Netzspannung möglich ist. Auf diese Weise ließen sich auch Aussagen über die zeitliche Reihenfolge/Staffelung von Komponenten, die einen Leistungsteil umfassen (beispielsweise Motoren) erhalten, wie sie beispielsweise bei einem Anlauf einer Anlage oder Maschine auftreten können.

Zusammen mit Steuerungsbefehlen, wie sie entweder der Anwender über eine Bedieneinrichtung eingibt (z.B. Human Maschine Interface eines Bedienterminals) oder wie sie aus dem Prozessablauf heraus erzeugt werden, kann eine Fehlerdiagnose der Anlage durch den Servicetechniker durchgeführt werden. Die Steuerungsbefehle können solche sein, wie sie im normalen Betrieb einer Anlage auftreten und zugelassen werden, es können aber auch eigens für eine Fehlerdiagnose notwendige Steuerungsbefehle sein. Vorgenannte Steuerungsbefehle kommunizieren über die zweite Netzwerkstruktur. Solche können beispielsweise nur durch einen Servicetechniker erzeugbar sein. O.g. Daten sind dabei nur als Beispiele zu verstehen und die Erfindung soll nicht darauf beschränkt sein, der Fachmann wird erkennen, dass weitere Daten in beiden Richtungen in vorteilhafter Weise mit Hilfe des PLC-Moduls über die zweite Netzwerkstruktur übertragen werden können, um eine Fehlerdiagnose der Anlage oder Maschine zu ermöglichen.

Nach einem weiteren Aspekt der Erfindung kann die Fehlerdiagnose zusätzlich auf einer logischen Auswertung von Daten der ersten Netzwerkstruktur beruhen. Zu diesem Zweck ist eine Verknüpfung von Daten der zweiten Netzwerkstruktur zusätzlich mit Daten vorgesehen, welche der ersten Netzwerkstruktur zugehörig zu betrachten sind. So kann es vorteilhaft sein, lediglich ausgewählte Parameter verschiedener Komponenten über die zweite Netzwerkstruktur zu überwachen und diese dann mit Daten zu vergleichen, die über die erste Netzwerkstruktur gesendet und/oder empfangen werden und darauf die Auswertung zu basieren. In einem anderen Beispiel können Steuerungsbefehlen, wie sie entweder der Anwender über eine Bedieneinrichtung eingibt (z.B. Human Maschine Interface eines Bedienterminals) oder wie sie aus dem Prozessablauf heraus erzeugt werden, über die erste Netzwerkstruktur in der jeweiligen Anlagenkomponente an das PLC-Modul übergeben und somit mit den Daten der zweiten Netzwerkstruktur verbunden werden. Die Steuerungsbefehle können hier gleichfalls solche sein, wie sie im normalen Betrieb einer Anlage auftreten und zugelassen werden oder es können auch eigens für eine Fehlerdiagnose notwendige Steuerungsbefehle generiert werden und zur Auswertung an die zweite Netzwerkstruktur übergeben werden. Somit kann eine Fehlerdiagnose der Anlage durchgeführt werden, ohne notwendigerweise auch die Steuerungsbefehle über die zweite Netzwerkstruktur zu führen.

Eine weiterentwickelte Ausführungsform sieht vor, dass die Kommunikationsadresse (respektive Kommunikationsadressen bei redundantem Aufbau), mit der die Komponente innerhalb der ersten Netzwerkstruktur kommuniziert an das PLC Modul übergeben wird und somit über die zweite Netzwerkstruktur an den Servicetechniker übermittelt werden kann. Diese Kommunikationsadresse kann beispielsweise in IP basierten Netzwerkstrukturen die IP Adresse sein. Auf diese Weise sind beispielsweise Adressenkonflikte oder Zuweisungsprobleme erkennbar. Ferner können auf diese Weise ggf. Aussagen zur Netzwerkstruktur und -topologie der ersten Netzwerkstruktur erfolgen.

Ein besonders vorteilhafter Aspekt ergibt sich dann, wenn über die zweite Netzwerkverbindung eine Verbindungsanalyse hinsichtlich der ersten Netzwerkstruktur erfolgt und die Verbindungsanalyse den Verbindungsstatus wenigstens einer Komponente in der ersten Netzwerkstruktur enthält. Unter Verbindungsanalyse soll in diesem Zusammenhang verstanden werden, dass Verbindungen einer Anlagenkomponente mit den anderen Anlagenkomponenten in der ersten Netzwerkstruktur untersucht werden. D.h. es wird eine zu untersuchende Anlagenkomponente in den Mittelpunkt gestellt und ausgehend von dieser Anlagenkomponente untersucht, mit welchen weiteren Anlagenkomponenten diese Komponente Verbindungen innerhalb der ersten Netzwerkstruktur erzeugen resp. aufrechterhalten kann. Die entsprechenden Befehle zur Initiierung einer solchen Verbindungsanalyse werden über die zweite Netzwerkstruktur beispielsweise durch den Servicetechniker erzeugt. Eine solche Untersuchung kann auf weitere Anlagenkomponenten ausgedehnt werden, die dann sozusagen aus ihrer Sicht eine Übersicht erzeugen, mit wem diese kommunizieren können. Auf diese Weise lassen sich Fehler insbesondere in kaskadierten Netzwerkstrukturen, die mit Routern und/oder Switchen ausgestattet sind, ermitteln. Weiterhin lassen sich Aussagen über die Topologie der Anlage erfassen. Auf diese Weise lassen sich ferner Fehlerbilder in funktional zusammengehörigen Anlagenkomponenten (z.B. Umrichter und dazugehöriger Motor) besser erfassen.

Nach einer weiteren Ausführungsform sollen über die zweite Netzwerkstruktur insbesondere die Signaturen des Anschlussstromes und/oder der Anschlussspannung einer Anlagenkomponente erfasst werden. Unter Signatur soll insbesondere das Amplituden-Zeitverhalten von Strom und/oder Spannung verstanden werden, sowohl im Einschalt- oder Ausschaltbereich (transient, subtransient) als auch im eingeschwungenen Zustand (stationär). Aus diesen Daten lassen sich schon relativ schnell Aussagen ableiten, inwieweit ein Defekt in der jeweiligen Anlagenkomponente oder in weiterführenden Anlagen- oder Maschinenteilen vorliegen. So kann beispielsweise ein abnormaler Strom- und/oder Spannungsverlauf bei einem Motor darauf hindeuten, dass beispielsweise dieser einen internen Schaden (z.B. Wicklungen, Wicklungsisolation, Welle, Lager) aufweist, oder aber Anlagen- oder Maschinenteile defekt sein können, die diesen mechanisch belasten bzw. die dieser bestimmungsgemäß anzutreiben hat (z.B. Getriebe, Lüfter, Pumpen).

Nach einem weiteren Aspekt der Erfindung können Daten aus der Verbindungsanalyse in Zusammenhang mit den Signaturdaten, insbesondere mit den Daten der Stromsignatur, gebracht werden und über logische Auswertung auf dieser Basis eine Fehlerdiagnose gestellt werden. Beispielsweise könnte eine Antriebskomponente (z.B. ein über Umrichter angetriebener Motor) innerhalb des Automatisierungssystems einer Fabrikautomation oder einer Maschine in der ersten Netzwerkstruktur zunächst als defekt gelten, wenn keine Einschaltbefehle ausgeführt werden oder rückgemeldet werden. Mittels Analyse über die zweite Netzwerkstruktur könnte festgestellt werden, dass der Motor - eingeschaltet über die erste Netzwerkstruktur - zwar keine aktive Verbindung in der ersten Netzwerkstruktur hat, sein Stromverbrauch, aber normal ist und somit die Verbindung zwischen dem Motor und seinem Umrichtermodul defekt sein muss. Für den Fall, dass keine aktive Verbindung in der ersten Netzwerkstruktur zum Motor besteht und der Stromverbrauch normal ist, wird aller Wahrscheinlichkeit nach die Kommunikation zum Umrichtermodul einen Defekt aufweisen. Für den wiederum anderen Fall, dass bei intakter Kommunikationsverbindung innerhalb der ersten Netzwerkstruktur der Stromverbrauch von der Norm abweicht, wird der Motor oder die mit ihm verbundenen mechanischen Antriebseinheiten eine Störung aufweisen. Die Erfindung und die logischen Auswertungsmöglichkeiten sind nicht auf das o.g. Beispiel allein beschränkt. Der Fachmann wird erkennen, dass weitere Auswertungen, insbesondere angepasst auf andere Automationskomponenten möglich sind.

Das PLC Modul wird in vorteilhafter Weise in der Automatisierungs- und Steuerungskomponente integriert sein, so dass der Anschluss eines Automatisierungs- oder Steuerungssystems wie üblich an das Stromversorgungsnetz erfolgen kann.

Darüber hinaus wird vorgeschlagen, auch mehrere PLC-Module innerhalb einer Automatisierungs- oder Steuerungskomponente zu integrieren und somit eine zweite Netzwerkstruktur auf Baugruppenebene zu schaffen. Dies kann insbesondere vorteilhaft sein für Automatisierungs- oder Steuerungskomponenten, die modular aufgebaut über mehrere Baugruppen verfügen und die nur einen Stromanschluss haben, wie dies beispielsweise für speicherprogrammierbare Steuerungen bekannt ist. Auf diese Weise könnte eine Fehlerdiagnose auf Baugruppenebene erfolgen und damit noch umfänglicher gestaltet werden.

Für bereits im Feld existierende Automatisierungs- oder Steuerungskomponenten wird der Einsatz von externen PLC-Modulen vorgeschlagen. Diese würden in der einfachsten Form lediglich die bereits beschriebene Strom-, Spannungsüberwachung vornehmen. In weiteren Ausbaugraden könnten die externen Module mit zusätzlichen digitalen oder analogen Signalen der Automatisierungs- oder Steuerungskomponenten versorgt werden. In diesem Fall könnte auch das PLC Modul mit digitalen oder analogen Ausgabebaugruppen verdrahtet werden. Vorteilhafter Weise werden diese digitalen oder analogen Ausgabe der Baugruppen solche Daten für das PLC Modul bereitstellen, um die vorgenannten Auswertung einschließlich Verbindungsanalyse durchführen zu können.

Die oben beschriebenen Eigenschaften, Merkmale und Vorteile dieser Erfindung sowie die Art und Weise, wie diese erreicht werden, werden in Verbindung mit den Figuren näher erläutert. Hierbei zeigen in schematischer Darstellung:
- FIG 1: eine Automatisierungsanlage mit Feld- und Steuerungsebene und übergeordneter Bedienebene
- FIG 2a: Automatisierungskomponenten in der Feldebene in Profibus DP Konfiguration
- FIG 2b: Automatisierungskomponenten in der Feldebene in Profinet Konfiguration
- FIG 3: Automatisierungskomponenten in der Feldebene in Profinet Konfiguration und einer zweiten Netzwerkstruktur mit PLC Verbindung
- FIG 4a: eine Automatisierungskomponente mit integriertem PLC Modul
- FIG 4b: eine Automatisierungskomponente mit externem PLC Modul

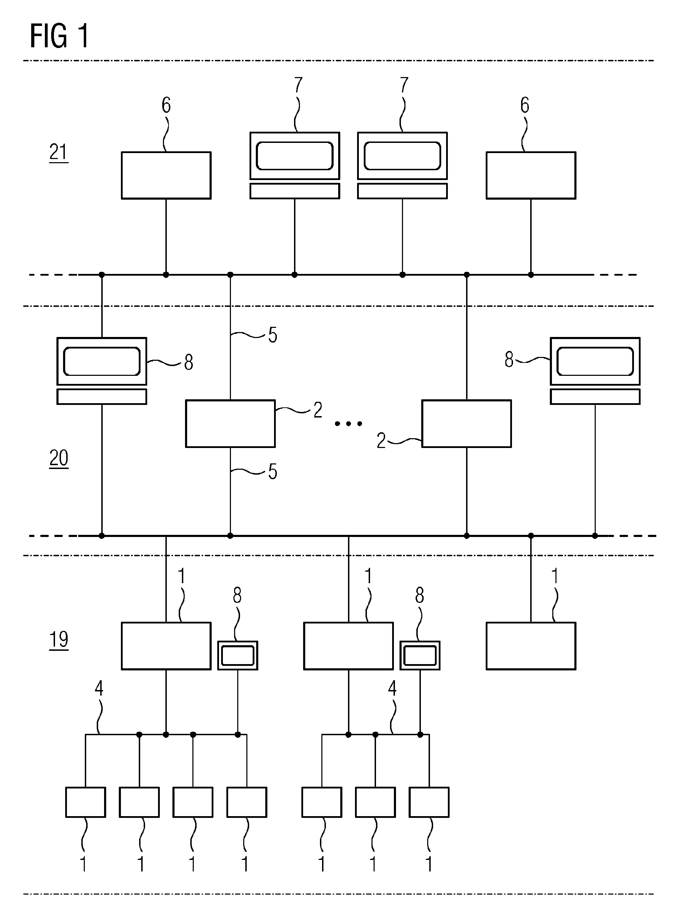

FIG 1 zeigt in einer allgemeinen Darstellung eine Feldebene 19, eine Steuerungsebene 20 der eine Bedien- und Beobachtungsebene (Operator-Level) 21 übergeordnet ist. Feld- und Steuerungsebene 19, 20 sowie Bedien- und Beobachtungsebene 21 sind durch ein industrielles Kommunikationsnetzwerk 5 miteinander verbunden. Die Bedien- und Beobachtungsebene 21 umfasst eine Anzahl von Recheneinheiten 6, wobei alle oder ein Teil der Recheneinheiten 6 mit Anzeige- und Eingabeeinheiten 7 verbunden sein können, um Daten einzugeben und/oder anzuzeigen. Der Bedien- und Beobachtungsebene 21 sind in der Regel weitere Ebenen übergeordnet und durch ein Kommunikationsnetzwerk miteinander verbunden; diese weiteren - hier nicht dargestellten - Ebenen sind als Management-Level oder Enterprise-Level bekannt.

Die Steuerungsebene 20 umfasst eine Vielzahl von übergeordneten Automatisierungskomponenten 2, die i.d.R. übergeordnete Steuer- und Regelungsaufgaben, Aufgaben der Datenhaltung sowie Aufgaben des Human-Machine Interfaces übernehmen. Auch die Feldebene 19 umfasste eine Vielzahl von Automatisierungsund Steuerungskomponenten 1, wobei in diesem Zusammenhang unter einer Automatisierungs- und/oder Steuerungskomponente in der Feldebene 19 jedwede intelligente, d.h. mittels Softwarealgorithmen betriebene oder beeinflussbare Automatisierungskomponenten verstanden werden sollen. Beispiele für solche Automatisierungskomponenten 1 sind programmierbare Steuerungen für Überwachungs- und/oder Steuerungs- bzw. Regelungsaufgaben. In der Feldebene 19 gehören zu solchen Komponentenohne darauf beschränkt zu sein -beispielsweise auch Antriebssysteme wie Umrichter einschließlich ihrer Motoren, soweit diese eine intelligente Kommunikationsschnittstelle besitzen und mittels Software angesteuert und/oder überwacht werden. Aber auch Sensoren, Aktoren oder andere Feldgeräte gehören zu den Automatisierungs- und Steuerungskomponenten 1. In der Steuerungs- und Feldebene 19, 20 können weitere Bedien- und Beobachtungseinheiten 8 vorgesehen sein, die mit Anzeige- und Eingabeeinheiten ausgestattet sind und entsprechend ihrer Aufgabe eingeschränkte Bedien- und Beobachtungsfunktionen haben können. Die Automatisierungs- und/oder Steuerungskomponenten 1 können wiederum mit weiteren Geräten (hier nicht weiter dargestellt) wie Fühler, Taster, Schalter verbunden werden, um Daten, wie beispielsweise Schaltzustände, Drücke, Temperaturen usw. vom Prozess zu erhalten bzw. auf den Prozess schaltend, steuernd oder regelnd Einfluss zu nehmen.

Der Datenaustausch zwischen den Automatisierungs- und Steuerungskomponenten wird über ein Kommunikationsnetzwerk 4 sichergestellt, wie es beispielsweise unter der Bezeichnung Profibus oder Profinet bekannt sind.

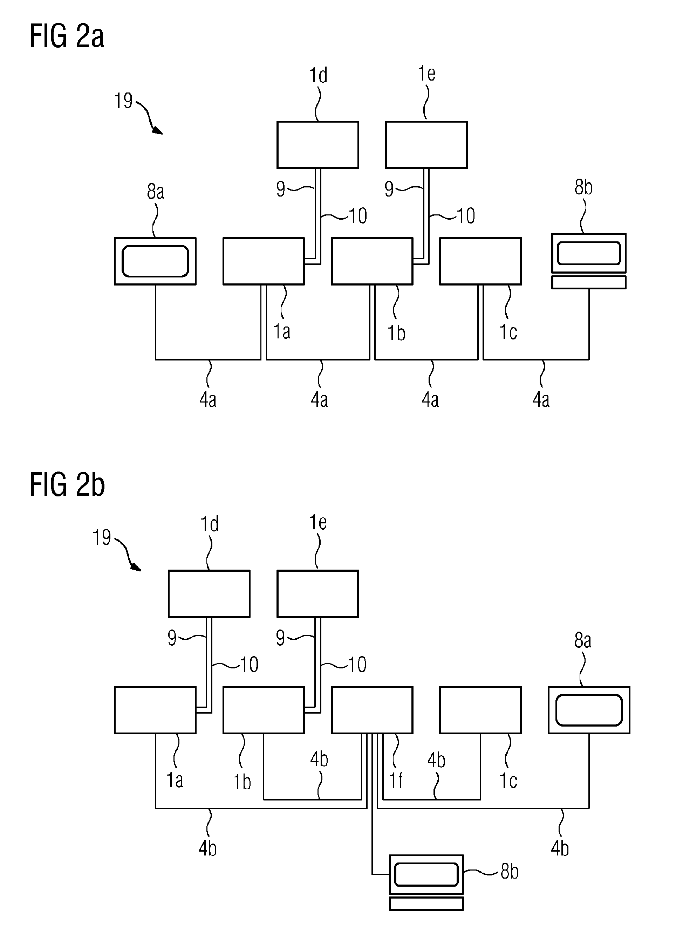

FIG 2a zeigt die Automatisierungskomponenten 1 in der Feldebene 19 mit einer Netzwerkstruktur 4 in Profibus DP Konfiguration 4a; FIG 2b zeigt die funktional gleiche Automatisierungskomponenten 1 in der Feldebene 19 mit einer Netzwerkstruktur 4 in Profinet Konfiguration 4b.

Dabei zeigen die Automatisierungskomponenten 1a und 1b jeweils einen Umrichter, der im Weiteren jeweils eine Verbindung 9 mit einem Motor 1d, 1e zur Leistungsübertragung aufweist. Parallel zur Verbindung 9 kann der Motor mit einer Kommunikationsverbindung 10 mit dem Umrichter verbunden sein, über die beispielsweise Daten wie Motortemperatur, Gebersignale oder auch Spannungszustandssignale übertragen werden können. In der FIG 2a können die Umrichter 1a, 1b beispielsweise Umrichter der Siemens Serien Micromaster 440 oder Sinamics G120 mit entsprechender Profibus DP Anbindung sein, wobei in der FIG 2b Umrichter der Siemens Serie Sinamics G120 mit entsprechender Profinet Anbindung in Frage kommen. Die dargestellte Automatisierungskomponente 1c kann eine speicherprogrammierbare Steuerung beispielsweise der Siemens Serie S300 mit den entsprechenden Schnittstellenmodulen sein, über die die Umrichter angesteuert werden können. Des Weiteren stellen die Geräte 8a und 8b maschinennahe mobile oder fest installierte Bedien- und Beobachtungseinheiten dar, wobei die mobilen Bedien- und Beobachtungseinheiten 8b auch Programmierfunktionen zulassen sollen. Die vorgenannten Automatisierungskomponenten in FIG 2b sind mit dem Netzwerkswitch 1f verbunden.

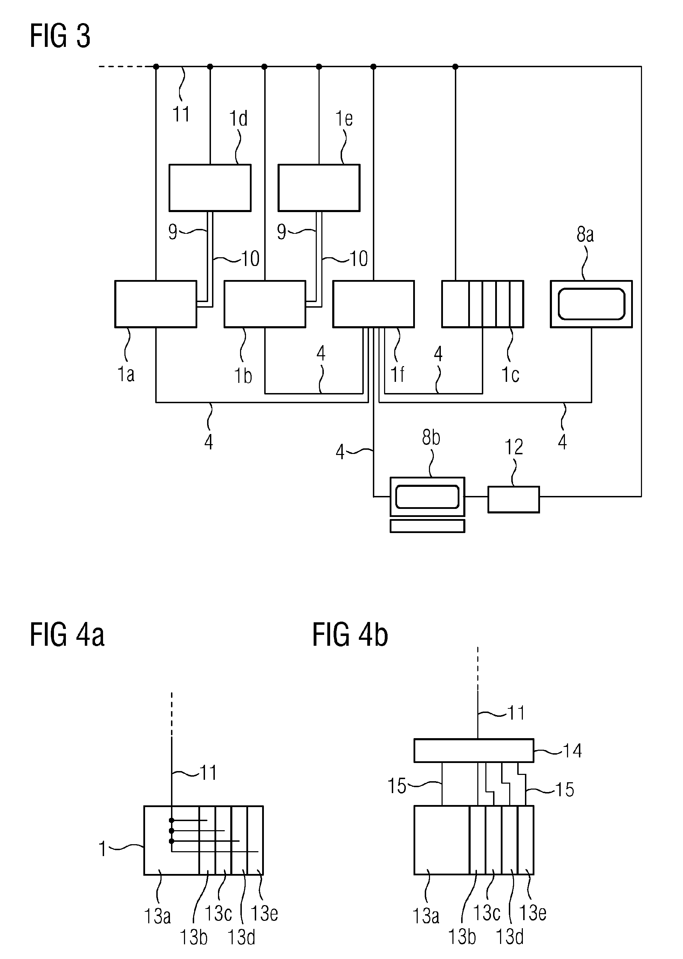

In der FIG 3 ist dargestellt, wie die Netzwerkstruktur 4b der FIG 2b durch eine zweite Netzwerkstruktur 11 zur Diagnose von Fehlern in den Automatisierungskomponenten 1 erweitert wird. Die zweite Netzwerkstruktur 11 verbindet die Automationskomponenten 1a bis 1f sowie die mobile Bedien- und Beobachtungseinheit 8b über den PLC Adapter 12. Die zweite Netzwerkstruktur 11 kommuniziert über die Energieversorgungsleitungen der Automatisierungskomponenten 1a bis 1f. Etwaige Stromversorgungsnetze unterschiedlicher Spannungsebenen sind möglich, hier aber nicht dargestellt. Die zweite Netzwerkstruktur 11 könnte allerdings auch in einer hier nicht dargestellten Weise auf die Komponenten 2,6,7,8 der Steuerungsebene 20 sowie der Bedien- und Beobachtungsebene 21 ausgedehnt sein.

Beispielsweise könnte in einer solchen Konfiguration der Motor 1e auf eine Abfrage des Servicetechnikers nicht mehr antworten bzw. reagieren. Wie eingangs dargestellt, wäre ohne die hier vorgeschlagene zweite Netzwerkstruktur eine detaillierte Fehlerdiagnose durch den Servicetechniker nur aufwendig möglich. Beispielsweise könnten mehrere Fehlerursachen in Frage kommen. Zum einen könnte der Motor 1e selbst defekt sein, es könnte aber auch sein, dass der Motor selbst sich einschalten lässt, der Umrichter 1b nicht mehr kommuniziert oder defekt ist, oder die Verbindung zwischen Motor 1e und seinem Umrichter 1b unterbrochen ist. Denkbar wäre auch ein Problem in der Automatisierungskomponente 1c, die im o.g. Beispiel den Umrichter 1b ansteuert. Etwaige Kommunikationsprobleme könnten auch durch die Netzwerkkomponente 1f hervorgerufen worden sein. Der Motor könnte allerdings ebenso durch nicht dokumentierte Anlagenänderungen gar nicht projektiert sein. Über die zweite Netzwerkstruktur ließe sich eine Fehlerdiagnose einfacher und ohne größeren Aufwand durch die logische Auswertung von Befehlen und Datenabfragen über die zweite Netzwerkstruktur durchführen. Über die zweite Netzwerkstruktur 11 ließe sich beispielsweiseweise eine Ansteuerung des Motors 1e der Reihe nach über die PLC-Verbindung zur Automatisierungskomponente 1c, 1f und zum Umrichter 1b durch den Servicetechniker vornehmen. Dazu könnte eine mobile Bedien- und Beobachtungseinheit 8b dienen, die über den PLC Adapter 12 mit der zweiten Netzwerkstruktur 11 verbunden ist. Über die Rückmeldung der Stromkennlinie, die über die PLC Verbindung zum Motor 1e an die Bedien- und Beobachtungseinheit 8b zurückgemeldet wird, könnte diagnostiziert werden, ob sich der Motor überhaupt einschalten lässt, und - für den Fall das er sich einschalten ließe - ob seine Stromkennlinie mit dem normalen Verhalten (auch des Anlaufverhaltens) des Motors 1e korreliert. Sollte das Einschalten nicht möglich sein, die Kommunikationsverbindung in der Netzwerkstruktur 4, 5 jedoch funktionieren (was über eine Verbindungsanalyse/ Datenabfrage über die zweite Netzwerkstruktur ermittelbar ist), müsste man von einem Defekt des Leistungsteils des Umrichters 1b ausgegangen werden. Sollte in der Stromkennlinie keine Abweichungen feststellbar sein, wird der Motor 1e selbst, der Leistungsteil des Umrichters 1b und die angehängten Aggregate (z.B. Pumpen, Lüfter, Getriebe) offensichtlich funktionieren. Bei abnormalen Stromwerten könnte der Motor oder die angehängten Aggregaten einen Schaden aufweisen. Für den Fall, dass der Motor 1e normale Stromwerte über die zweite Netzwerkstruktur 11 zurück liefert, der Umrichter 1b aber keine Daten von dem Motor 1e liefert obwohl seine Verbindung in der Netzwerkstruktur 4 funktioniert, wird aller Wahrscheinlichkeit nach die Kommunikationsverbindung 10 zwischen Umrichter und Motor schadhaft sein. Funktioniert die Verbindung zum Umrichter 1b in der Netzwerkstruktur 4 nicht, obwohl die Verbindungen zu den Komponenten 1c und 1f funktionieren, wird die Verbindung zum Umrichtermodul unterbrochen sein, bzw. das Umrichtermodul defekt sein. Mit oben beispielhaft dargestellter Auswertung und Datenabfragen über die zweite Netzwerkstruktur 11 ist es möglich eine gezieltere Fehlerdiagnose durchzuführen zu können.

In FIG 4a ist schematisch eine Automatisierungskomponente 1 gezeigt, die aus mehreren Baugruppen 13a bis 13e aufgebaut ist. Dabei könnte es sich bei der Baugruppe 13a um eine Prozessorbaugruppe handeln, bei der Baugruppe 13b um eine Kommunikationsbaugruppe und bei der den Baugruppen 13c bis 13e um Ein- Ausgabebaugruppen. Darin ist die zweite Netzwerkstruktur 11 so innerhalb der Automatisierungskomponente 1 vernetzt, dass über die zweite Netzwerkverbindung 11 mit jeder der Baugruppen 13a bis 13e einzeln, zumindest aber mit der Prozessorbaugruppe 13a kommuniziert werden kann, so dass auf Baugruppenebene interne und/oder Prozessdaten Daten abgefragt werden können.

FIG 4b stellt ein externes PLC Modul 14 dar, welches über separate elektrische Verbindungen 15 an die vorgenannten Baugruppen 13a bis 13e angeschlossen ist und Daten mit diesen austauschen kann. Dazu ist das PLC Modul 14 weiter mit digitalen und/oder analogen Schnittstellen und/oder seriellen oder anderen Kommunikationsschnittstellen ausgestattet, an die die elektrischen Verbindungen 15 angeschlossen sind. Im einfachsten Falle werden digitale oder analoge Ausgänge der Baugruppen 13a bis 13e mit dem PLC Modul 14 verdrahtet. In alternativen Ausgestaltungen wäre auch ein Anschluss des PLC Moduls über eine serielle Kommunikationsschnittstelle mit nur einer Baugruppe möglich.

## Patentansprüche

1. Verfahren zur Diagnose von Fehlern in Anlagen und/oder Maschinen, die Anlagen und/oder Maschinen umfassend eine Vielzahl von Automatisierungs- und/oder Steuerungskomponenten (1), (2), wobei die Komponenten über eine erste Netzwerkstruktur (4),(5),(10) miteinander verbunden sind, wobei über die erste Netzwerksstruktur Daten zur Steuerung und/oder Überwachung der Komponenten im Betrieb der Anlage und/oder Maschine übertragen werden, **dadurch gekennzeichnet, dass** die Anlage eine zweite Netzwerkstruktur (11) aufweist, wobei die zweite Netzwerkstruktur unabhängig von der ersten Netzwerkstruktur ist und keine Daten zur Steuerung und Überwachung im Betrieb der Anlage überträgt und die zweite Netzwerkstruktur eine Datenübertragungstechnologie auf Stromversorgungsleitungen verwendet über die die Komponenten mit Energie versorgt werden, wobei die Fehlerdiagnose auf einer im Wesentlichen logischen Auswertung von Datenabfragen über die zweite Netzwerkstruktur erfolgt.

2. Verfahren nach Anspruch 1, **dadurch gekennzeichnet, dass** die Fehlerdiagnose zusätzlich auf einer logischen Auswertung von Daten der ersten Netzwerkstruktur beruht.

3. Verfahren nach Anspruch 2, **dadurch gekennzeichnet, dass** über die zweite Netzwerkstruktur die Kommunikationsadresse, insbesondere die IP-Adresse, übermittelt wird, mit der die Komponente innerhalb der ersten Netzwerkstruktur kommuniziert.

4. Verfahren nach einem der vorhergehenden Ansprüche, **dadurch gekennzeichnet, dass** über die zweite Netzwerkstruktur eine Verbindungsanalyse hinsichtlich der ersten Netzwerkstruktur erfolgt, wobei die Verbindungsanalyse den Verbindungsstatus wenigstens einer Komponenten beinhaltet.

5. Verfahren nach einem der vorhergehenden Ansprüche, **dadurch gekennzeichnet, dass** über die zweite Netzwerkstruktur eine Signatur des Anschlussstromes und/oder der Anschlussspannung einer Komponente übermittelt wird.

6. Verfahren nach Anspruch 4 und 5 **dadurch gekennzeichnet, dass** die Fehlerdiagnose im Wesentlichen auf der logischen Auswertung der Signatur des Stromverbrauches und der Verbindungsanalyse basiert.

7. Automatisierungs- und/oder Steuerungskomponente zur Überwachung oder Steuerung einer Anlage und/oder Maschine umfassend einen Anschluss für eine erste Netzwerkstruktur, wobei die Komponente über die erste Netzwerkstruktur im Betrieb der Anlage und/oder Maschine überwachbar oder steuerbar ist, **dadurch gekennzeichnet, dass** die Komponente zusätzlich einen Anschluss für eine zweite Netzwerkstruktur aufweist, wobei die zweite Netzwerkstruktur unabhängig von der ersten Netzwerkstruktur ist und die Komponente über die zweite Netzwerkstruktur nicht im Betrieb der Anlage und/oder Maschine überwacht oder gesteuert ist und wobei die zweite Netzwerkstruktur eine Datenübertragungstechnologie auf Stromversorgungsleitungen aufweist, über die die Komponente mit Energie versorgt wird.

8. Automatisierungs- und/oder Steuerungskomponente nach Anspruch 7, **dadurch gekennzeichnet, dass** eine Fehlerdiagnose für die Komponente auf einer im Wesentlichen logischen Auswertung von Datenabfragen über die zweite Netzwerkstruktur erfolgt.

9. Anlagen und/oder Maschinen aufweisend Automatisierungsund/oder Steuerungskomponenten nach einem der Ansprüche 7 oder 8.
